# FASCICULE DE BREVET EUROPEEN

(11) **EP 2 192 012 B1**
(45) Date de publication et mention de la délivrance du brevet: **18.10.2017**
(21) Numéro de dépôt: 09176983.6
(22) Date de dépôt: 25.11.2009
(51) Int. Cl.: B60T 11/26

(54) **Réservoir de fluide hydraulique**
Behälter für hydraulische Flüssigkeit
Hydraulic fluid reservoir

(30) Priorité: 27.11.2008 FR 0806687
(43) Date de publication de la demande: 02.06.2010
(73) Titulaire: Robert Bosch GmbH, 70442 Stuttgart (DE)
(72) Inventeur: L'Aot, Jean-Michel, 93240, Stains (FR); Lenczner, Sylvain, 77450, Esbly (FR); Beaure- D'Augeres, Olivier, 08019, Barcelone (ES); Gaffe, François, 44420 La Turballe (FR)

(56) Documents cités:
- EP-A- 1 570 890
- DE-A1- 10 217 619
- DE-A1-102007 035 840

## Description

La présente invention se rapporte à un réservoir de fluide hydraulique. Plus particulièrement, l'invention se rapporte à un réservoir de fluide hydraulique alimentant simultanément plusieurs circuits hydrauliques.

Un circuit hydraulique doit être alimenté en fluide hydraulique. Quand un dispositif comporte un ou plusieurs circuits hydrauliques, il comporte généralement un ou plusieurs réservoirs de fluide hydraulique dont des exemples sont décrits dans DE 10 2007 035840 ou dans EP-A-1 570 890. Cependant, en raison d'un gain de place évident, si plusieurs circuits hydrauliques nécessitent un même type de fluide hydraulique pour fonctionner, il est fréquent d'employer un seul et même réservoir pour lesdits circuits hydrauliques. Par exemple, les réservoirs de liquide de frein comportent une réserve de liquide de frein pour un circuit hydraulique de freinage et un circuit hydraulique d'embrayage. Le liquide de frein est alors utilisé aussi bien pour le circuit hydraulique de freinage que pour le circuit hydraulique d'embrayage.

Cependant, les différences de nature entre les circuits hydrauliques entraînent des interactions différentes entre lesdits circuits hydrauliques et le fluide hydraulique contenu dans le réservoir. Dans le cas d'un réservoir de liquide de frein alimentant un circuit hydraulique d'embrayage, un refoulement de liquide de frein dans le réservoir a lieu durant l'utilisation du circuit hydraulique d'embrayage. Avec l'usure, lors de ce refoulement, des particules polluantes en provenance du circuit hydraulique d'embrayage peuvent pénétrer dans le réservoir. Ces particules polluantes peuvent pénétrer dans le circuit hydraulique de freinage et entraîner une pollution, une dégradation plus rapide voire un dysfonctionnement du circuit hydraulique de freinage.

Pour résoudre ce problème, l'invention prévoit d'empêcher les particules polluantes refoulées par un circuit hydraulique de polluer un autre circuit hydraulique alimenté par le même réservoir, en empêchant lesdites particules de pénétrer dans une partie interne du réservoir. La partie interne du réservoir sert de zone de stockage pour le fluide hydraulique alimentant les circuits hydrauliques. Le dispositif selon l'invention prévoit de faire subir aux particules polluantes et au fluide hydraulique, lors d'un refoulement, des turbulences permettant le refoulement du fluide hydraulique tout en empêchant les particules polluantes de pénétrer dans une partie interne du réservoir. Par exemple, en créant un tourbillon lors du refoulement, le poids des particules polluantes empêche ces dernières de pénétrer dans la partie interne du réservoir. Des déflecteurs peuvent êtres prévus afin d'assurer plus de turbulences. De tels déflecteurs écartent les particules du cheminement emprunté par le fluide. Les particules polluantes peuvent alors être retenues dans une zone de rétention alors que le fluide est refoulé dans la partie interne du réservoir.

L'invention a donc pour objet un réservoir de fluide hydraulique comportant une pipe d'alimentation et une partie interne de réservoir, la pipe d'alimentation comportant un conduit de circulation cylindrique mettant en communication un circuit hydraulique et la partie interne du réservoir, caractérisé en ce qu'il comporte un dispositif de séparation muni de moyen de créer des turbulences et des moyens de séparation pour séparer, dans des tourbillons de fluide ainsi provoqués, des particules de poids différents. L'invention prévoit que le dispositif de séparation comporte une zone de décantation et une zone de collecte situées dans le réservoir, la zone de collecte et la zone de décantation étant séparées par une paroi; la pipe d'alimentation se développe dans la zone de décantation contre la paroi séparant la zone de collecte et la zone de décantation; la pipe comporte une sortie opposée à une entrée située hors de la partie interne du réservoir, ladite sortie débouchant dans la zone de décantation; la pipe comporte un déflecteur situé proche de la sortie de la pipe dans le conduit de circulation; la pipe comporte un orifice, ledit orifice étant situé entre le déflecteur et l'entrée de la pipe et débouchant dans la zone de collecte.

Un mode de réalisation particulier de l'invention prévoit que le réservoir comporte dans le conduit de circulation une chicane sous forme de pièce rapportée.

Un mode de réalisation particulier de l'invention prévoit qu'une première pièce rapportée, insérée dans la pipe, comporte au moins deux plateaux similaires se développant dans des plans parallèles à la base du conduit cylindrique, une périphérie du plateau est en contact étanche avec une surface interne de la pipe, les plateaux comportent des orifices de passage qui ne sont pas en vis à vis direct suivant la génératrice du conduit de circulation cylindrique, formant ainsi deux à deux la chicane.

Un mode de réalisation particulier de l'invention prévoit qu'une paroi interne de la pipe sépare le conduit de circulation cylindrique en deux parties, une partie de rétention et une partie de circulation, la paroi interne se développe sur un plan parallèle à la génératrice du conduit de circulation cylindrique, une deuxième pièce rapportée comportant un orifice d'entrée et un conduit de passage est inséré dans le conduit de circulation, l'orifice d'entrée est délimité par une paroi de la deuxième pièce rapportée, ladite paroi se développant dans un plan parallèle à la base cylindrique du conduit de circulation, la paroi de la deuxième pièce rapportée est en contact étanche avec la surface interne de la pipe en tout point de ladite surface interne situé sur le plan de développement de ladite paroi, le conduit de passage est partiellement introduit dans la partie de rétention, une sortie du conduit de passage étant situé dans la partie de rétention, un écart est présent entre la paroi interne de la pipe et la deuxième pièce rapportée sur toute une surface de la paroi interne de la pipe.

Un mode de réalisation particulier de l'invention prévoit qu'une troisième pièce rapportée est insérée dans la pipe, la troisième pièce rapportée est en contact étanche avec la surface interne de la pipe, la troisième pièce rapportée comporte une partie tronconique, une extrémité de la partie tronconique comportant un orifice de filtration, ledit orifice de filtration formant l'entrée d'un conduit de filtration, le conduit de filtration se développe suivant l'axe de la génératrice du conduit de circulation.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :

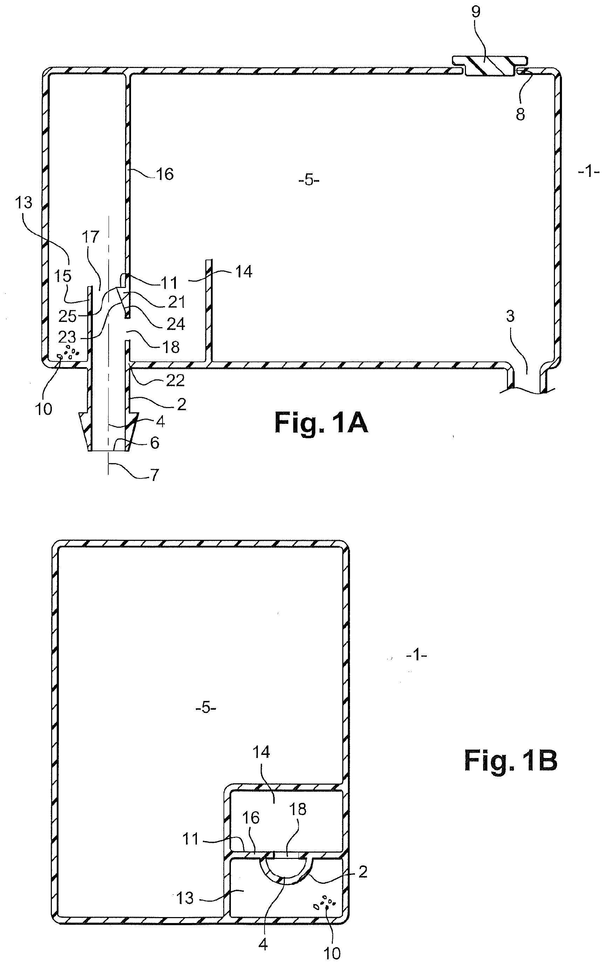

- Figure 1.A : Une vue en coupe suivant une première coupe d'un réservoir de fluide hydraulique selon un premier mode de réalisation de l'invention.
- Figure 1.B : une vue en coupe suivant une deuxième coupe d'un réservoir de fluide hydraulique selon le premier mode de réalisation de l'invention.
- Figure 2.A : Une vue en coupe d'une pipe d'embrayage de réservoir de fluide hydraulique selon un deuxième mode de réalisation de l'invention.

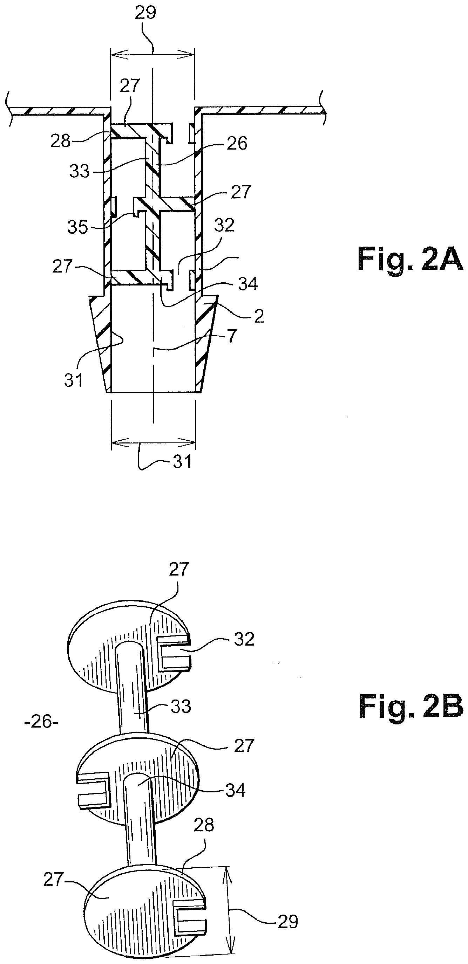

- Figure 2.B : Une vue en perspective schématique d'une première pièce rapportée selon le deuxième mode de réalisation de l'invention.

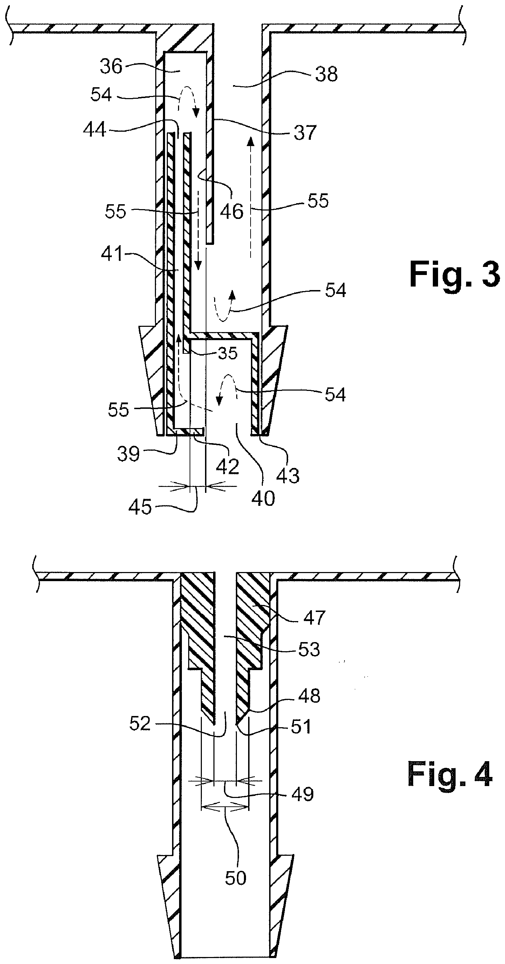

- Figure 3 : Une vue en coupe d'une pipe d'embrayage comportant une deuxième pièce rapportée selon un troisième mode de réalisation de l'invention.
- Figure 4 : Une vue en coupe d'une pipe d'embrayage comportant une troisième pièce rapportée selon un quatrième mode de réalisation de l'invention.

Les références ci-dessous sont utilisées dans les figures et la description des figures qui suit :
1 - Réservoir de fluide hydraulique
2 - Pipe d'embrayage
3 - sortie d'alimentation
4 - Conduit de circulation de la pipe
5 - Partie interne du réservoir
6 - base circulaire
7 - génératrice du conduit de circulation
8 - trou de remplissage
9 - bouchon
10 - particules polluantes
11 - dispositif de séparation
13 - Zone de décantation
14 - Zone de collecte
15 - extrémité de la pipe
16 - paroi
17 - sortie interne de la pipe
18 - orifice de circulation
21 - déflecteur
22 - intersection entre la pipe et le réservoir
23 - paroi inclinée
24 - première extrémité de la paroi inclinée
25 - deuxième extrémité de la paroi inclinée
26 - première pièce rapportée
27 - plateau
28 - périphérie du plateau
29 - diamètre du plateau
30 - surface interne de la pipe
31 - diamètre interne de la pipe
32 - orifice de passage
33 - tige
34 - centre du plateau
35 - déflecteurs du plateau
36 - partie de rétention
37 - cloison interne de la pipe
38 - partie de circulation
39 - deuxième pièce rapportée
40 - orifice d'entrée de la deuxième pièce rapportée
41 - conduit de passage de la deuxième pièce rapportée
42 - paroi de la deuxième pièce rapportée
43 - périphérie de la paroi 42
44 - sortie du conduit de passage
45 - écart entre la cloison interne et la deuxième pièce rapportée
46 - surface de la cloison interne de la pipe
47 - troisième pièce rapportée
48 - partie tronconique
49 - diamètre inférieur de la partie tronconique
50 - diamètre supérieur de la partie tronconique
51 - extrémité de la partie tronconique
52 - orifice de séparation
53 - conduit de séparation
54 - turbulence
55 - flux principal

La figure 1.A représente une vue en coupe suivant une première coupe d'un réservoir de fluide hydraulique selon un premier mode de réalisation de l'invention.

Un réservoir 1 de fluide hydraulique sert de zone de stockage à un fluide hydraulique. Un tel stockage a pour fonction d'assurer l'alimentation en fluide hydraulique, de manière continue, d'un circuit hydraulique.

Des circuits hydrauliques de nature différente mais nécessitant le même fluide hydraulique peuvent êtres alimentés par un même réservoir 1. Par exemple, un réservoir de liquide de frein peut alimenter à la fois un ou plusieurs circuits hydrauliques de freinage et un circuit hydraulique d'embrayage.

Généralement, un tel réservoir un comporte une pipe d'embrayage 2 et au moins une sortie d'alimentation 3 de circuit hydraulique de freinage. La pipe d'embrayage 2 sert d'interface d'alimentation en fluide hydraulique, typiquement en liquide de frein, au circuit hydraulique d'embrayage. La sortie d'alimentation 3 de circuit hydraulique de freinage sert d'interface d'alimentation en liquide de frein au circuit hydraulique de freinage.

La pipe d'embrayage 2 comporte un conduit de circulation 4 généralement cylindrique. Le conduit de circulation 4 met en communication le circuit hydraulique d'embrayage et une partie interne 5 du réservoir 1. Généralement, le conduit de circulation 4 comporte une base circulaire 6 et une génératrice 7 telle que la génératrice 7 est perpendiculaire à la base 6.

La partie interne 5 du réservoir 1 sert de zone de stockage au liquide de frein dans le réservoir 1. Le remplissage de la partie interne 5 en liquide de frein se fait par l'intermédiaire d'un trou de remplissage 8. Le trou de remplissage 8 est généralement situé sur le haut du réservoir 1. Un bouchon 9 est généralement fixé, par exemple par vissage, de manière étanche sur le trou de remplissage 8.

L'utilisation d'un même réservoir 1 pour alimenter plusieurs circuits hydraulique de nature différente peut cependant poser des problèmes. Par exemple, un circuit hydraulique d'embrayage refoule du liquide de frein qui peut comporter des particules polluantes 10.

Dans les réservoirs 1 de l'état de la technique, la pipe 2 d'embrayage débouche directement dans la partie interne 5 du réservoir 1. Au mieux, la pipe 2 débouche dans une chambre du réservoir 1, ladite chambre étant en contact direct avec le reste de la partie interne 5 du réservoir 1. Les particules polluantes 10 refoulées avec le liquide de frein par le circuit hydraulique d'embrayage sont directement mélangées au reste du contenu de la partie interne 5 du réservoir 1. Ces particules polluantes 10 peuvent alors être introduites dans le circuit hydraulique de freinage lors de l'utilisation dudit circuit hydraulique de freinage et entraîner une diminution des performances du circuit hydraulique de freinage voire sa dégradation.

Pour éviter cette dégradation, le dispositif selon l'invention prévoit l'utilisation d'un dispositif de séparation 11. Le dispositif de séparation 11 est muni de moyens de créer des turbulences et de moyens de séparation pour séparer dans des tourbillons de fluide ainsi provoqués des particules de poids différents. Typiquement, les turbulences font tourbillonner le fluide et les particules polluantes 10 si bien que les particules polluantes 10 ont un mouvement qui ne leur permet pas d'entrer dans la partie interne 5 du réservoir. Par ailleurs le poids des particules polluantes 10 sépare celles-ci du fluide pénétrant dans la partie interne 5 du réservoir.

Dans les dispositifs de l'état de la technique, le liquide de frein ainsi que les particules polluantes 10 se déplacent dans la pipe suivant une direction parallèle à la génératrice 7 du conduit de circulation 4. Dans le dispositif selon l'invention, le liquide de frein refoulé est dévié de sa trajectoire par des turbulences crées par le dispositif de séparation 11. Selon le mode de réalisation de l'invention, les particules polluantes 10 peuvent alors soit être stockées directement dans la pipe d'embrayage 2, soit dans une zone prévue à cet effet dans le réservoir.

Dans un premier mode de réalisation de l'invention, le dispositif de séparation 11 comporte une zone de décantation 13 et une zone de collecte 14. La zone de décantation 13 et la zone de collecte 14 sont séparées par une paroi 16. La zone de décantation 13 forme un espace clos à l'intérieur du réservoir 1. Le liquide de frein contenu dans la zone de décantation 13 n'a pas de contact direct avec le liquide de frein présent dans la partie interne 5 du réservoir 1.

Une extrémité 15 de la pipe d'embrayage 2 se développe à l'intérieur de la zone de décantation 13. L'extrémité 15 de la pipe 2 se développe contre la paroi 16. Plus particulièrement, la paroi 16 constitue à la fois une paroi pour la zone de décantation 13 et pour la pipe 2, comme vu sur la figure 1.B. Une sortie interne 17 de la pipe 2 est située à l'extrémité 15 de la pipe d'embrayage 2, typiquement dans la zone de décantation 13.

Un orifice de circulation 18 est réalisé sur la paroi 16. L'orifice 18 est tel qu'il met en contact le conduit de circulation 4 de la pipe 2 et la zone de collecte 14 uniquement. La circulation du liquide de frein entre la zone de décantation 13 et la zone de collecte 14 se fait via le conduit de circulation 4 et l'orifice 18. L'orifice de circulation 18 est situé sur la paroi 16 entre la sortie interne 17 et une intersection 22 entre la pipe 2 et le réservoir 1. L'orifice 18 situé la paroi 16 se développe parallèlement à la génératrice 7 du conduit de circulation 4. Les particules polluantes 10 refoulées se déplaçant dans le conduit 4 suivant une direction parallèle à la génératrice 7, les particules polluantes 10 ne passent pas au travers de l'orifice 18 lors d'un refoulement. Par ailleurs, un orifice situé sur la paroi 16 peut servir d'orifice de communication par débordement entre la zone de décantation 13 et la zone de collecte 14.

Selon l'invention, la pipe 2 comporte un déflecteur 21, situé dans le conduit de circulation 4, proche de la sortie 17. Le déflecteur 21 forme une paroi inclinée 23 par rapport à la génératrice 7 du conduit de circulation 4. La sortie interne 17 forme une ouverture, suivant un plan parallèle à la base 6 du conduit de circulation 4, inférieure à la surface de ladite base cylindrique 6. L'inclinaison de la paroi inclinée 23 est telle qu'une première extrémité 24 de la paroi inclinée 23 proche de la paroi 16 est plus proche de l'orifice 18 qu'une deuxième extrémité 25 éloignée de la paroi 16. Dans l'exemple illustré, le déflecteur 21 est situé au dessus de l'orifice 18. Il est bien entendu que la mise en oeuvre d'un déflecteur 21 disposé en dessous de l'orifice 18 ne sort pas du cadre de la présente invention. Les cloisons, parois inclinées, déflecteurs ou analogues cassent le flux laminaire et général des turbulences. Lors d'un refoulement, la paroi inclinée 23 crée des turbulences en modifiant la trajectoire du fluide refoulé ainsi que des particules polluantes 10. Ces turbulences empêchent les particules polluantes 10 refoulées hors de la pipe 2 de retomber directement dans la pipe et de passer par l'orifice 18 afin de pénétrer dans la zone de collecte 14. Si malgré ces turbulences des particules polluantes 10 passent par l'orifice 18, ces particules polluantes 10 rentrent alors dans la zone de collecte 14 sans avoir une dynamique suffisante pour leur permettre de passer de la zone de collecte 14 à la partie interne 5 du réservoir 1. Les particules polluantes 10 restent alors au fond de la zone de collecte 14 de par leur poids. Ces particules polluantes 10 ne sont donc pas en contact avec la sortie d'alimentation 3 du circuit hydraulique de freinage.

La figure 2.A représente une vue en coupe d'une pipe d'embrayage de réservoir de fluide hydraulique selon un deuxième mode de réalisation de l'invention.

Un autre mode de réalisation prévoit la présence de pièces rapportées dans la pipe 2. Ces pièces rapportées peuvent être retenues par différents moyens de fixation, par exemple des têtes munies de reliefs (cannelures, sapins...) s'emboîtant dans des orifices situés dans la paroi interne de la pipe 2. Ces pièces rapportées ont pour fonction de créer des chicanes. Ces chicanes créent les turbulences nécessaires afin d'empêcher les particules polluantes 10 de pénétrer dans la partie interne du réservoir. Un tel mode de réalisation est particulièrement adapté dans le cas de réservoirs 1 dans lesquels la pipe d'embrayage 2 débouche directement dans la partie interne 5 du réservoir 1 et non pas dans une chambre 14.

Un mode de réalisation du dispositif selon l'invention prévoit l'insertion dans le conduit de circulation 4 d'une première pièce rapportée 26. La première pièce rapportée 26 selon l'invention comporte un plateau 27. Le plateau 27 se développe dans un plan parallèle à la base cylindrique 6 du conduit de circulation 4. Une périphérie 28 du plateau 27 est en contact étanche avec une surface interne 30 de la pipe 2. Typiquement, le plateau 27 à un diamètre 29 inférieur et proche d'un diamètre interne 31 de la pipe 2. Cette étanchéité est telle que le liquide de frein et les particules polluantes 10 ne peuvent pas passer entre le plateau 27 et la surface interne 30.

Pour permettre malgré tout la circulation du liquide de frein dans le conduit de circulation 4, le plateau 27 comporte un orifice de passage 32. la présence du plateau 27 et de l'orifice 32 crée des turbulences, le fluide et les particules polluantes ne pouvant passer que par l'orifice 32. Ces turbulences entraînent un tourbillonnement des particules polluantes 10. Ce tourbillonnement donne aux particules polluantes 10 un mouvement qui ne leur permet pas de passer par l'orifice 33 et donc de pénétrer dans la partie interne 5 du réservoir.

Le positionnement et la forme des ouvertures génèrent des turbulences visant à « éjecter » les particules éventuelles du flux principal rentrant dans le réservoir. On entend par turbulence : la génération d'un flux de type indirect, voir tourbillonnaire, induit par le déflecteur de type 35 et ce, de préférence à chaque niveau plateau type 27 - l'effet de cloison crée un flux orienté à contrario du flux principal.

La figure 2.B représente une vue en perspective schématique d'une première pièce rapportée selon le deuxième mode de réalisation de l'invention.

Préférentiellement dans ce mode de réalisation, la première pièce rapportée 26 comporte trois plateaux 27. Ces trois plateaux 27 sont reliés entre eux par une tige 33. La tige 33 est fixée à un centre 34 de chaque plateau 27. Les plateaux 27 sont similaires. Typiquement, chaque plateau 27 se développe dans un plan parallèle à la base cylindrique 6 du conduit de circulation 4. Par ailleurs, chaque plateau 27 est en contact étanche avec la surface interne 30 de la pipe 2. De plus, chaque plateau 27 comporte un orifice de passage 32.

Les orifices de passage 32 présents sur les plateaux 27 ne sont pas en vis à vis direct, suivant l'axe de la génératrice 7 du conduit de circulation 4, deux à deux. De telles absences de vis à vis direct créent des turbulences encore plus importantes. Les particules polluantes 10 tourbillonnent encore plus entre chaque plateau 27. Les particules polluantes 10 sont alors bloquées par les plateaux 27 successifs et ne polluent pas la partie interne 5 du réservoir 1 et donc le circuit hydraulique de freinage.

Afin de bloquer encore plus efficacement encore le refoulement de particules polluantes 10 dans la partie interne 5 du réservoir 1, un déflecteur 35 peut être installé sur toute la périphérie d'un ou plusieurs orifices de passage 32. Des tels déflecteurs 35 se présentent sous la forme de rebords 35 s'étendant suivant une direction parallèle à la génératrice 7. Lors d'un refoulement, les particules polluantes 10 butent contre les rebords 35. Cette butée augmente encore les turbulences. Ces rebords, ainsi que ces orifices de passages 32 ne gênent pas le passage du liquide de frein, de par sa fluidité. Typiquement, la pièce rapportée forme une chicane dans le conduit de circulation 4 provoquant les turbulences empêchant l'intrusion des particules polluantes 10 dans la partie interne du réservoir.

La figure 3 représente une vue en coupe d'une pipe d'embrayage comportant une deuxième pièce rapportée selon un troisième mode de réalisation de l'invention.

Selon un troisième mode de réalisation du dispositif selon l'invention, la pipe 2 comporte une cloison interne 37. La cloison interne 37 sépare le conduit de circulation 4 en deux parties, une première partie 36, dite partie de rétention 36, et une deuxième partie 38, dite partie de circulation 38. La cloison interne 37 se développe dans un plan parallèle à la génératrice 7 du conduit de circulation 4. La partie de rétention 36 comporte un fond ne permettant pas le passage direct du fluide dans la partie interne 5 depuis le conduit de circulation 5 par la partie de rétention 36.

Une deuxième pièce rapportée 39 creuse est insérée dans le conduit de circulation 4. La deuxième pièce rapportée 39 comporte un orifice d'entrée 40 et un conduit de passage 41. L'orifice d'entrée 40 est délimité par une paroi 42 de la deuxième pièce rapportée 39. La paroi 42 de la deuxième pièce rapportée 39 se développe dans un plan parallèle à la base cylindrique 6 du conduit de circulation 4. Une périphérie 43 de la paroi 42 est en contact étanche avec la surface interne 30 de la pipe 2 en tout point de ladite surface interne 30 situé dans le plan de développement de ladite paroi 42. Le liquide de frein et les particule polluantes 10 ne peuvent passer que par l'orifice d'entrée 40 de la deuxième pièce rapportée 39 pour circuler à travers la pipe 2.

Le conduit de passage 41 est partiellement introduit dans la partie de rétention 36. Une sortie 44 du conduit de passage 41 est située dans la partie de rétention 36. Le conduit de passage 41 comble partiellement la partie de rétention 36. Un écart 45 est présent entre la cloison interne 37 de la pipe 2 et la deuxième pièce rapportée 39 en tout point d'une une surface 46 de ladite cloison interne 37. La surface 46 est en vis à vis de la deuxième pièce rapportée 39. Cet écart 45 permet le passage du liquide de frein entre la partie de rétention 36 et la partie de circulation 38. La forme ainsi que la complémentarité de la deuxième pièce rapportée 39 et du conduit de circulation 4 forment la chicane créant les turbulences empêchant les particules polluantes 10 de pénétrer dans la partie interne 5 du réservoir. En variante, un déflecteur 35 prolonge vers le bas le conduit de passage 41. Sur la figure 3, on a illustré par les flèches 54, les turbulences et par les flèches 55 le flux principal.

La figure 4 représente une vue en coupe d'une pipe d'embrayage comportant une troisième pièce rapportée selon un quatrième mode de réalisation de l'invention.

Dans ce mode de réalisation du dispositif selon l'invention, une troisième pièce rapportée 47 est introduite dans le conduit de circulation 4. La troisième pièce rapportée 47 est en contact étanche avec la surface interne 30 de la pipe 2. Typiquement, le liquide de frein et les particules polluantes 10 ne peuvent pas pénétrer dans la partie interne 5 du réservoir 1 en passant entre la troisième pièce rapportée 47 et la surface interne 30 de la pipe 2.

La troisième pièce rapportée 47 comporte une partie tronconique 48. La partie tronconique 48 se développe selon un axe parallèle à la génératrice 7 du conduit de circulation 4. Un diamètre inférieur 49 de la partie tronconique 48 est plus éloigné de la partie interne 5 du réservoir 1 qu'un diamètre supérieur 50 de la partie tronconique 48. Le diamètre inférieur 49 est inférieur au diamètre supérieur 50. Le diamètre supérieur 50 est proche du diamètre interne 31 de la pipe 2.

Une extrémité 51 de la partie tronconique 48 comporte un orifice de séparation 52. L'extrémité 51 est l'extrémité de la partie tronconique 48 la plus éloignée de la partie interne 5 du réservoir 1, c'est à dire la partie ayant le plus petit diamètre. L'orifice de séparation 52 constitue l'entrée d'un conduit de séparation 53. Le conduit de séparation 53 se développe suivant l'axe de la génératrice 7 du conduit de circulation 4.

La partie tronconique 48 de la troisième pièce rapportée 47 bloque les particules polluantes 10 entre la surface interne 30 de la pipe 2 et la troisième pièce rapportée 47. Le liquide de frein est refoulé dans la partie interne 5 du réservoir 1 par le conduit de séparation 53. Les particules polluantes 10 qui butent contre la partie tronconique 48 sont bloquées entre la troisième pièce rapportée 47 et la surface interne 30 par les turbulences crées par ce rétrécissement du conduit de circulation 4.

Une pièce rapportée 47 peut être moulée avec la pipe 2. Par ailleurs il est tout à fait envisageable de combiner différents modes de réalisation décrits ci-dessus les uns avec les autres afin d'assurer absence de pollution du circuit hydraulique de freinage de manière optimale.

## Revendications

1. Réservoir (1) de fluide hydraulique comportant
- une pipe (2) d'alimentation,
- une partie interne de réservoir (5)
- la pipe d'alimentation comportant un conduit de circulation (4) cylindrique mettant en communication un circuit hydraulique et la partie interne (5) du réservoir, comportant un dispositif de séparation (11) muni de moyen de créer des turbulences et des moyens de séparation pour séparer dans des tourbillons de fluide ainsi provoqués des particules de poids différentes **caractérisé en ce que**
- le dispositif de séparation comporte une zone de décantation (13) et une zone de collecte (14), la zone de collecte et la zone de décantation étant séparées par une paroi (16),
- la pipe d'alimentation se développe dans la zone de décantation (13) contre la paroi (16) séparant la zone de collecte (14) et la zone de décantation (13),
- la pipe (2) comporte une sortie (17) débouchant dans la zone de décantation,
- la pipe (2) comporte un déflecteur (21) situé dans le conduit de circulation (4), proche de la sortie (17) de la pipe (2),
- la pipe comporte un orifice (18), ledit orifice étant situé entre le déflecteur (21) et l'intersection (22) de la pipe (2) et du réservoir (1), et débouchant dans la zone de collecte (14).

2. Réservoir selon la revendication 1, **caractérisé en ce qu'**il comporte dans le conduit de circulation (4) une chicane sous forme de pièce rapportée.

3. Réservoir selon la revendication 2, **caractérisé en ce que**
- une première pièce rapportée (26), insérée dans la pipe (2), comporte au moins deux plateaux similaires (27) se développant dans des plans parallèles à la base du conduit cylindrique (4),
- une périphérie (28) du plateau est en contact étanche avec une surface interne (30) de la pipe,
- les plateaux comportent des orifices de passage (32),
- les orifices de passages (32) ne sont pas en vis à vis direct suivant la génératrice du conduit de circulation cylindrique (4), formant ainsi deux à deux la chicane.

4. Réservoir selon l'une des revendications 2 à 3, **caractérisé en ce qu'**un déflecteur ou rebord (35) est situé sur toute une périphérie de l'orifice.

5. Réservoir selon l'une des revendications 1 à 3, **caractérisé en ce que**
- une cloison interne (37) de la pipe sépare le conduit de circulation cylindrique en deux parties, une partie de rétention (36) et une partie de circulation (38),
- la paroi interne se développe sur un plan parallèle à la génératrice du conduit de circulation cylindrique,
- une deuxième pièce rapportée (39) comportant un orifice d'entrée (40) et un conduit de passage (41) est inséré dans le conduit de circulation,
- l'orifice d'entrée est délimité par une paroi (42) de la deuxième pièce rapportée, ladite paroi se développant dans un plan parallèle à la base cylindrique du conduit de circulation,
- la paroi (42) de la deuxième pièce rapportée est en contact étanche avec la surface interne de la pipe en tout point de ladite surface interne situé sur le plan de développement de ladite paroi,
- le conduit de passage est partiellement introduit dans la partie de rétention, une sortie (44) du conduit de passage étant situé dans la partie de rétention,
- un écart (45) est présent entre la cloison interne de la pipe et la deuxième pièce rapportée sur toute une surface (46) de la cloison interne de la pipe.

6. Réservoir selon la revendication 1, **caractérisé en ce que**
- une troisième pièce rapportée (47) est insérée dans la pipe,
- la troisième pièce rapportée est en contact étanche avec la surface interne de la pipe,
- la troisième pièce rapportée comporte une partie tronconique (48), une extrémité (51) de la partie tronconique comportant un orifice de séparation (52), ledit orifice de séparation formant l'entrée d'un conduit de séparation (53),
- le conduit de séparation se développe suivant l'axe de la génératrice du conduit de circulation.

7. Réservoir selon l'une des revendications 1 à 5, **caractérisé en ce que** le dispositif de séparation est moulé avec le réservoir

## Patentansprüche

1. Hydraulikfluid-Vorratsbehälter (1), der Folgendes umfasst:
- ein Versorgungsrohr (2),
- einen Vorratsbehälterinnenteil (5),
- wobei das Versorgungsrohr eine zylindrische Zirkulationsleitung (4) aufweist, die eine Kommunikation zwischen einem Hydraulikkreis und dem Vorratsbehälterinnenteil (5) herstellt, und
- eine Trennvorrichtung (11), die mit Mitteln zum Erzeugen von Turbulenzen und mit Trennmitteln, um in den dadurch hervorgerufenen Fluidwirbeln Partikel mit unterschiedlichem Gewicht zu trennen, versehen ist, **dadurch gekennzeichnet, dass**
- die Trennvorrichtung eine Ausfällzone (13) und eine Sammelzone (14) aufweist, wobei die Sammelzone und die Ausfällzone durch eine Wand (16) getrennt sind,
- das Versorgungsrohr in der Ausfällzone (13) an der Wand (16) verläuft, die die Sammelzone (14) und die Ausfällzone (13) trennt,
- das Rohr (2) einen Auslass (17) aufweist, der in die Ausfällzone mündet,
- das Rohr (2) eine Ablenkungseinrichtung (21) aufweist, die sich in der Zirkulationsleitung (4) in der Nähe des Auslasses (17) des Rohrs (2) befindet,
- das Rohr eine Öffnung (18) aufweist, wobei sich die Öffnung zwischen der Ablenkungseinrichtung (21) und dem Schnittpunkt (22) des Rohrs (2) mit dem Vorratsbehälter (1) befindet und in die Sammelzone (14) mündet.

2. Vorratsbehälter nach Anspruch 1, **dadurch gekennzeichnet, dass** er in der Zirkulationsleitung (4) ein Hindernis in Form eines angefügten Teils aufweist.

3. Vorratsbehälter nach Anspruch 2, **dadurch gekennzeichnet, dass**
- ein erstes angefügtes Teil (26), das in das Rohr (2) eingesetzt ist, wenigstens zwei ähnliche Platten (27) aufweist, die sich in Ebenen, die zu der Basis der zylindrischen Leitung (4) parallel sind, befinden,
- ein Umfang (28) der Platte in dichtem Kontakt mit einer inneren Oberfläche (30) des Rohrs ist,
- die Platten Durchlassöffnungen (32) aufweisen,
- die Durchlassöffnungen (32) sich längs der Erzeugenden der zylindrischen Zirkulationsleitung (4) nicht direkt einander gegenüber befinden und somit paarweise das Hindernis bilden.

4. Vorratsbehälter nach einem der Ansprüche 2 bis 3, **dadurch gekennzeichnet, dass** sich auf dem gesamten Umfang der Öffnung eine Ablenkungseinrichtung oder ein Rand (35) befindet.

5. Vorratsbehälter nach einem der Ansprüche 1 bis 3, **dadurch gekennzeichnet, dass**
- eine innere Trennwand (37) des Rohrs die zylindrische Zirkulationsleitung in zwei Teile trennt, nämlich in einen Halteteil (36) und einen Zirkulationsteil (38),
- die innere Wand sich in einer Ebene erstreckt, die zu der Erzeugenden der zylindrischen Zirkulationsleitung parallel ist,
- ein zweites angefügtes Teil (39), dass eine Einlassöffnung (40) und eine Durchlassleitung (41) aufweist, in die Zirkulationsleitung eingesetzt ist,
- die Einlassöffnung durch eine Wand (42) des zweiten angefügten Teils begrenzt ist, wobei sich die Wand in einer Ebene parallel zu der zylindrischen Basis der Zirkulationsleitung erstreckt,
- die Wand (42) des zweiten angefügten Teils an jedem Punkt der inneren Oberfläche, die sich in der Ebene erstreckt, in der sich die Wand befindet, in dichtem Kontakt mit der inneren Oberfläche des Rohrs ist,
- die Durchlassleitung teilweise in den Halteteil eingeführt ist, wobei sich ein Auslass (44) der Durchlassleitung in dem Halteteil befindet,
- zwischen der inneren Trennwand des Rohrs und dem zweiten angefügten Teil auf einer gesamten Oberfläche (46) der inneren Trennwand des Rohrs ein Abstand (45) vorhanden ist.

6. Vorratsbehälter nach Anspruch 1, **dadurch gekennzeichnet, dass**
- ein drittes angefügtes Teil (47) in das Rohr eingesetzt ist,
- das dritte angefügte Teil mit der inneren Oberfläche des Rohrs in dichtem Kontakt ist,
- das dritte angefügte Teil einen kegelstumpfförmigen Teil (48) aufweist, wobei ein Ende (51) des kegelstumpfförmigen Teils eine Trennöffnung (52) aufweist, wobei die Trennöffnung den Einlass einer Trennleitung (53) bildet,
- die Trennleitung sich längs der Achse der Erzeugenden der Zirkulationsleitung erstreckt.

7. Vorratsbehälter nach einem der Ansprüche 1 bis 5, **dadurch gekennzeichnet, dass** die Trendvorrichtung mit dem Vorratsbehälter gegossen ist.

## Claims

1. Hydraulic fluid reservoir (1) comprising
- a supply pipe (2),
- an internal reservoir part (5),
- the supply pipe comprising a cylindrical circulation duct (4) placing a hydraulic circuit in communication with the internal part (5) of the reservoir,
comprising a separation device (11) provided with means for creating turbulence and separation means for separating particles of different weights in fluid vortexes thus produced, **characterized in that**
- the separation device comprises a settling zone (13) and a collection zone (14), the collection zone and the settling zone being separated by a wall (16),
- the supply pipe develops in the settling zone (13) against the wall (16) separating the collection zone (14) and the settling zone (13),
- the pipe (2) comprises an outlet (17) opening into the settling zone,
- the pipe (2) comprises a deflector (21) situated in the circulation duct (4), close to the outlet (17) of the pipe (2),
- the pipe comprises an orifice (18), said orifice being situated between the deflector (21) and the intersection (22) of the pipe (2) and the reservoir (1) and opening into the collection zone (14).

2. Reservoir according to Claim 1, **characterized in that** it comprises a baffle in the form of an add-on component in the circulation duct (4).

3. Reservoir according to Claim 2, **characterized in that**
- a first add-on component (26), inserted into the pipe (2), comprises at least two similar plates (27) developing in planes parallel to the base of the cylindrical duct (4),
- a periphery (28) of the plate is in sealed contact with an internal surface (30) of the pipe,
- the plates comprise passage orifices (32),
- the passage orifices (32) are not directly opposite along the generatrix of the cylindrical circulation duct (4), thus forming the baffle in pairs.

4. Reservoir according to either of Claims 2 and 3, **characterized in that** a deflector or rim (35) is situated over a whole periphery of the orifice.

5. Reservoir according to one of Claims 1 to 3, **characterized in that**
- an internal partition (37) of the pipe separates the cylindrical circulation duct into two parts, a retention part (36) and a circulation part (38),
- the internal wall develops on a plane parallel to the generatrix of the cylindrical circulation duct,
- a second add-on component (39) comprising an inlet orifice (40) and a passage duct (41) is inserted into the circulation duct,
- the inlet orifice is delimited by a wall (42) of the second add-on component, said wall developing in a plane parallel to the cylindrical base of the circulation duct,
- the wall (42) of the second add-on component is in sealed contact with the internal surface of the pipe at any point of said internal surface situated on the development plane of said wall,
- the passage duct is partially introduced into the retention part, an outlet (41) of the passage duct being situated in the retention part,
- a spacing (45) is present between the internal partition of the pipe and the second add-on component over a whole surface (46) of the internal partition of the pipe.

6. Reservoir according to Claim 1, **characterized in that**
- a third add-on component (47) is inserted into the pipe,
- the third add-on component is in sealed contact with the internal surface of the pipe,
- the third add-on component comprises a frustoconical part (48), an end (51) of the frustoconical part comprising a separation orifice (52), said separation orifice forming the inlet of a separation duct (53),
- the separation duct develops along the axis of the generatrix of the circulation duct.

7. Reservoir according to one of Claims 1 to 5, **characterized in that** the separation device is moulded with the reservoir.
